# EUROPÄISCHE PATENTSCHRIFT

(11) **EP 3 192 159 B1**
(45) Veröffentlichungstag und Bekanntmachung des Hinweises auf die Patenterteilung: **03.03.2021**
(21) Anmeldenummer: 15763830.5
(22) Anmeldetag: 26.08.2015
(51) Int. Cl.: H02M 3/335

(54) **ÜBERTRAGERANORDNUNG MIT EINEM PRIMÄRTEIL UND EINEM SEKUNDÄRTEIL**
TRANSMISSION ARRANGEMENT COMPRISING A PRIMARY PART AND A SECONDARY PART
ENSEMBLE DE TRANSMISSION POURVU D'UNE PARTIE PRIMAIRE ET D'UNE PARTIE SECONDAIRE

(30) Priorität: 08.09.2014 DE 102014012967
(43) Veröffentlichungstag der Anmeldung: 19.07.2017
(73) Patentinhaber: SEW-EURODRIVE GmbH & Co. KG, 76646 Bruchsal (DE)
(72) Erfinder: KOLLAR, Hans, Jürgen, 76646 Bruchsal (DE); BENNERSCHEIDT, Ralf, 76131 Karlsruhe (DE)
(86) Internationale Anmeldenummer: PCT/EP2015/001735
(87) Internationale Veröffentlichungsnummer: WO 2016/037687

(56) Entgegenhaltungen:
- EP-A2- 1 276 218
- DE-A1- 2 447 968
- DE-A1- 3 800 787
- DE-A1- 4 021 385
- DE-A1- 19 548 986
- US-A- 4 680 689
- US-A- 5 703 765
- US-A1- 2006 227 577
- US-B1- 7 602 158
- YILEI GU ET AL: "Voltage doubler application in isolated resonant converters", INDUSTRIAL ELECTRONICS SOCIETY, 2005. IECON 2005. 31ST ANNUAL CONFERENCE OF IEEE, IEEE, PISCATAWAY, NJ, USA, 6 November 2005 (2005-11-06), pages 1184-1188, XP010876103, DOI: 10.1109/IECON.2005.1569073 ISBN: 978-0-7803-9252-6

## Beschreibung

Die Erfindung betrifft eine Übertrageranordnung mit einem Primärteil und einem Sekundärteil.

Es ist allgemein bekannt, dass eine Übertrageranordnung mit einem Primärteil und einem Sekundärteil ausgeführt ist, so dass eine primärseitig angelegte Spannung im Wesentlichen zu einer mit dem Übersetzungsverhältnis multiplizierten Spannung führt.

Aus der US 4 680 689 A ist ein Drehstromgleichrichter mit Leistungsfaktorkorrektur bekannt.

Aus der EP 1 276 218 A2 ist eine elektrische Schaltungsanordnung bekannt.

Aus der US 2006/227577 A1 ist ein DC-DC-Wandler bekannt.

Aus der DE 38 00 787 A1 ist ein Gleichstrom-Gleichstrom-Wandler mit einem Transformator bekannt.

Aus der US 7 602 158 B1 ist eine Standby-Schaltung für eine nicht-isolierte Niedervolt-Spannung bekannt.

Aus der DE 24 47 968 A1 ist ein Gleichspannungswandler zum Erzeugen zweier einzeln gesteuerter und stabilisierter Gleichspannungen bekannt.

Aus der Veröffentlichung XP010876103 ist ein Spannungsverdoppler mit isoliert und resonant betriebenen Umrichtern bekannt.

Aus der DE 195 48 986 A1 ist als nächstliegender Stand der Technik eine Übertragungsanordnung mit einem Primärteil und einem Sekundärteil bekannt.

Aus der DE 40 21 385 A1 ist eine Schaltungsanordnung zur Erzeugung von zwei Gleichspannungen bekannt.

Aus der US 5 703 765 A ist ein Flyback Umrichter mit geregelter Ausgangsspannung bekannt.

Der Erfindung liegt daher die Aufgabe zugrunde, eine Übertrageranordnung mit einem Primärteil und einem Sekundärteil weiterzubilden, wobei eine einfache Herstellung und kompakte Bauweise erreichbar sein soll.

Erfindungsgemäß wird die Aufgabe bei der Übertrageranordnung mit einem Primärteil und einem Sekundärteil nach den in Anspruch 1 angegebenen Merkmalen gelöst.

Wichtige Merkmale der Erfindung bei der Übertrageranordnung mit einem Primärteil und einem Sekundärteil sind, dass das Primärteil eine Primärwicklung aufweist und das Sekundärteil eine an die Primärwicklung induktiv gekoppelte Sekundärwicklung aufweist,
wobei das Sekundärteil eine oder mehrere Ausgangsspannungen bereitstellt, insbesondere zur Versorgung eines Verbrauchers
wobei das Sekundärteil zumindest einen Einweggleichrichter und/oder eine Kaskadenschaltung aufweist.

Von Vorteil ist dabei, dass mehr als nur eine einzige Ausgangsspannung sekundärseitig bereit stellbar ist. Dabei ist der Zusatzaufwand zur Erzeugung verschiedener Sekundärspannungen sehr gering. Denn die Sekundärwicklung versorgt mehrere Schaltungen parallel.

Bei einer vorteilhaften Ausgestaltung umfasst der Einweggleichrichter eine Kapazität, welcher der aus der Sekundärwicklung austretende Strom über eine Diode zugeführt wird. Von Vorteil ist dabei, dass eine einfache Herstellung erreichbar ist.

Bei einer vorteilhaften Ausgestaltung ist die Kaskadenschaltung aus der Sekundärwicklung versorgt und stellt ausgangsseitig einen erhöhten Spannungsbetrag, insbesondere im Vergleich zur Ausgangsspannung des Einweggleichrichters, bereit,

insbesondere wobei der aus der Sekundärwicklung austretende Ausgangsstrom über eine Kapazität und eine erste Diode einer Kapazität zugeführt wird, an der die Ausgangsspannung anliegt und/oder bereitgestellt wird, wobei eine weitere Diode zwischen einerseits dem Verbindungspunkt zwischen der ersten Kapazität und der ersten Diode und andererseits zwischen dem Verbindungspunkt zwischen der Sekundärwicklung und der ersten Kapazität angeordnet ist. Von Vorteil ist dabei, dass sogar höhere Spannungen bereit stellbar sind als die von der Einweggleichrichtung lieferbare.

Bei einer vorteilhaften Ausgestaltung versorgt die Sekundärwicklung des Sekundärteils den oder die Einweggleichrichter und die Kaskadenschaltung parallel, insbesondere also der oder die Einweggleichrichtung und die Kaskadenschaltung aus der Sekundärwicklung versorgt sind. Von Vorteil ist dabei, dass nur eine einzige Sekundärwicklung notwendig ist und die Einweggleichrichter sowie Kaskadenschaltung durch Bestückung einer Leiterplatte in einfacher Weise realisierbar sind.

Bei einer vorteilhaften Ausgestaltung ist die Polung der Diode eines ersten Einweggleichrichters unterschiedlich zur Polung der Diode eines zweiten Einweggleichrichters. Von Vorteil ist dabei, dass eine positive und eine negative Spannung bereit stellbar ist.

Bei einer vorteilhaften Ausgestaltung weist der Primärteil eine Push-Pull-Schaltung auf, die die Primärwicklung des Primärteils speist,
insbesondere wobei die Primärwicklung aus zwei Primärwicklungsabschnitten zusammengesetzt ist, die jeweils mit einem Schalter in Reihe geschaltet sind, wobei die beiden so gebildeten Reihenschaltungen parallelgeschaltet sind und die so gebildete Parallelschaltung aus einer Gleichspannungsquelle versorgt ist. Von Vorteil ist dabei, dass nur wenige Schalter notwendig sind.

Bei einer vorteilhaften Ausgestaltung weist der Primärteil eine Halbbrücken-Schaltung auf, die die Primärwicklung des Primärteils speist,

insbesondere wobei eine Halbbrücke, insbesondere wobei die Halbbrücke zwei in Reihe geschaltete Schalter aufweist, parallel zu einer Reihenschaltung aus zwei Kapazitäten geschaltet ist, wobei die so gebildete Parallelschaltung aus einer Gleichspannungsquelle versorgt ist, wobei die Primärwicklung aus der zwischen der Mittelanzapfung der Reihenschaltung der beiden Kapazitäten und dem Ausgang der Halbbrücke anliegenden Spannung versorgt ist. Von Vorteil ist dabei, dass ein geringer Aufwand für Wicklungen vorhanden ist und außerdem nur wenige Schalter notwendig sind.

Bei einer vorteilhaften Ausgestaltung weist der Primärteil eine Vollbrücken-Schaltung auf, die die Primärwicklung des Primärteils speist,

insbesondere wobei zwei Halbbrücken, insbesondere wobei jede Halbbrücke zwei in Reihe geschaltete Schalter aufweist, parallelgeschaltet sind, wobei die so gebildete Parallelschaltung aus einer Gleichspannungsquelle versorgt ist, wobei die Primärwicklung aus der zwischen den Ausgängen der Halbbrücken anliegenden Spannung versorgt ist. Von Vorteil ist dabei, dass eine große Leistung übertragbar und bereit stellbar ist.

Bei einer vorteilhaften Ausgestaltung sind die Schalter als steuerbare Halbleiterschalter, insbesondere wie IGBT oder MOSFET, ausgeführt. Von Vorteil ist dabei, dass eine einfache Steuerung oder Regelung der Spannungen ausführbar ist.

Bei einer vorteilhaften Ausgestaltung werden die Schalter derart angesteuert, dass die Spannungs-Zeit-Fläche des zeitlichen Verlaufs der an der Primärwicklung oder an einem Primärwicklungsabschnitt anliegenden Spannung symmetrisch ist, insbesondere also mittelwertfrei. Von Vorteil ist dabei, dass ein optimales Spannungsverhältnis ausgangsseitig bereit stellbar ist.

Bei einer vorteilhaften Ausgestaltung werden die Schalter derart angesteuert, dass der zeitliche Verlauf der an der Primärwicklung oder an einem Primärwicklungsabschnitt anliegenden Spannung symmetrisch ist, insbesondere also der Betrag der Spannung. Von Vorteil ist dabei, dass eine gleichmäßige Auslastung erreichbar ist.

Bei einer vorteilhaften Ausgestaltung werden die am Sekundärteil ausgangsseitig bereit gestellten Spannungen erfasst und mit jeweiligen Sollwerten verglichen,
wobei die größte relative Regelabweichung bestimmt wird und einem Regler zugeführt wird, der die Schalter davon abhängig ansteuert, insbesondere so dass diese Regelabweichung gegen Null geregelt wird. Von Vorteil ist dabei, dass stets die am meisten eingebrochene Spannung schnellstmöglich auf ihren Sollwert hin geregelt wird. Somit ist insgesamt bei geringem regelaufwand die höchste Genauigkeit der bereit gestellten Spannungen erreichbar.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

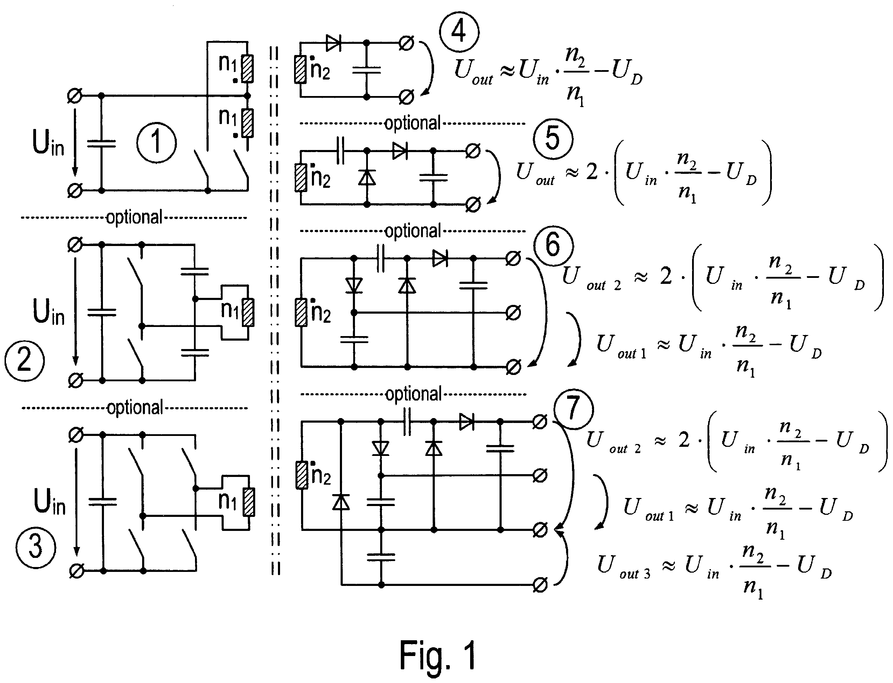

In der Figur 1 sind Kombinationen zur Herstellung einer erfindungsgemäßen Übertrageranordnung gezeigt.

Die Übertrageranordnung weist einen Primärteil auf und einen induktiv daran gekoppelten Sekundärteil auf.

Als Primärteil ist entweder eine Push-Pull-Schaltung 1 einsetzbar oder eine Halbbrückenschaltung 2 oder eine Vollbrückenschaltung 3.

Als Sekundärteil ist entweder eine Einweggleichrichtung 4 oder eine Kaskadenschaltung 5 oder eine Einweggleichrichtung 6 kombiniert mit Kaskadenschaltung oder eine Einweggleichrichtung 7 kombiniert mit Kaskadenschaltung und invertierter Einweggleichrichtung einsetzbar.

Dabei weist die Push-Pull-Schaltung 1 zwei Primärwicklungsabschnitte der Primärwicklung auf, die jeweils mit einem Schalter in Reihe geschaltet sind, wobei die beiden so gebildeten Reihenschaltungen parallelgeschaltet sind und diese so gebildete Parallelschaltung aus einer Gleichspannung versorgt ist. Dabei werden die Schalter abwechselnd in den leitenden Zustand versetzt. Auf diese Weise sind also nur zwei steuerbare Schalter, wie Halbleiterschalter, notwendig. Allerdings ist eine Primärwicklung mit Mittelanzapfung oder alternativ sind zwei vorzugsweise gleichartige Primärwicklungsabschnitte notwendig.

Bei der Halbbrückenschaltung 2 wird aus einer Gleichspannungsquelle eine Halbbrücke, also eine Reihenschaltung aus zwei Schaltern, gespeist, wobei der somit erzeugbare Wechselstrom am Ausgang der Halbbrücke über eine Primärwicklung an eine Reihenschaltung zweier Kapazitäten geleitet wird. Stromrichtungsabhängig wird somit der Ausgangsstrom der Halbbrücke über eine jeweilige Kapazität an das obere oder das untere Potential der Gleichspannungsquelle geleitet.

Bei der Vollbrückenschaltung 3 wird eine Vollbrücke, also eine Parallelschaltung aus zwei Halbbrücken, die jeweils als Reihenschaltung von Schaltern ausgeführt sind, aus einer Gleichspannungsquelle versorgt. Zwischen den beiden Ausgängen der beiden Halbbrücken ist eine Primärwicklung angeordnet, die somit eine größere Spannungsänderung erfahren kann als bei der Halbbrückenschaltung 2. Allerdings sind vier Schalter notwendig, die vorzugsweise pulsweitenmoduliert betrieben werden. Durch die Steuerung der Pulsweite ist eine Steuerung der Ausgangsspannung der Übertrageranordnung ausführbar.

Die Windungszahl der Primärwicklung beträgt n_1 bei der Halbbrückenschaltung 2 und bei der Vollbrückenschaltung 3; bei der Push-Pull-Schaltung beträgt die Windungszahl 2 * n_1, da jeder Primärleiterabschnitt die Windungszahl n_1 aufweist.

An die Primärwicklung des gewählten Primärteils (1, 2 oder 3) ist eine Sekundärwicklung gekoppelt, die bei jeder Kombination die Windungszahl n_2 aufweist und vorzugsweise auf demselben Kern, insbesondere Ferritkern, gewickelt ist also die Primärwicklung

Die einfachste Ausführung des Sekundärteils bezieht sich auf den Einweggleichrichter 4. Dabei wird die an der Sekundärwicklung induzierte Ausgangsspannung über eine Diode einer Kapazität zugeführt, an welcher die Ausgangsspannung anliegt, welche der mit dem Übersetzungsverhältnis n_2 / n_1 multiplizierten Eingangsspannung entspricht, wobei die Ausgangsspannung um die Durchlassspannung der Diode vermindert ist.

Die Ausführung der Kaskadenschaltung 5 ermöglicht eine höhere Ausgangsspannung als im Fall des Einweggleichrichters 4. Bei der in der Figur 1 gezeigten Kaskadenschaltung 5 ergibt sich das doppelte der Ausgangsspannung des Einweggleichrichters 4. Hierzu wird der aus der Sekundärwicklung austretende Ausgangsstrom über eine erste Kapazität und eine erste Diode einer Kapazität zugeführt, wobei die an der zweiten Kapazität anliegende Spannung als Ausgangsspannung zur Verfügung gestellt wird. Eine weitere Diode ist zwischen dem Verbindungspunkt der ersten Kapazität und der ersten Diode sowie dem Verbindungspunkt zwischen der Sekundärwicklung und der zweiten Kapazität angeordnet und sperrt die durch die erste Kapazität durchgeleiteten positiven Ströme.

Die mit der Einweggleichrichtung kombinierte Kaskadenschaltung gemäß Bezugszeichen 6 der Figur 1 ermöglicht die Bereitstellung zweier Spannungen, wobei das Vorzeichen der mit Einweggleichrichtung erzeugten Spannung durch Umkehren der Diode umkehrbar ist. Dabei versorgt die Sekundärwicklung den Einweggleichrichter parallel zusammen mit der Kaskadenschaltung.

Wie in Figur 1 mit Bezugszeichen 7 gezeigt, sind auch drei Ausgangsspannungen bereit stellbar, indem aus der Sekundärwicklung parallel eine Kaskadenschaltung, ein erster Einweggleichrichter und ein weiterer Einweggleichrichter versorgt werden. Dabei unterscheiden sich die beiden Einweggleichrichter in der Polung der Diode. Auf diese Weise weist die vom ersten Einweggleichrichter bereit stellbare Ausgangsspannung umgekehrtes Vorzeichen auf im Vergleich zu der vom weiteren Einweggleichrichter bereit gestellten Ausgangsspannung.

Bei einem weiteren erfindungsgemäßen Ausführungsbeispiel wird die Kaskadenschaltung durch eine entsprechende Kaskadenschaltung ersetzt, welche ausgangsseitig mehr als das Doppelte an Spannung bereitstellen kann.

Bei einem weiteren erfindungsgemäßen Ausführungsbeispiel werden die am Sekundärteil ausgangsseitig bereit gestellten Spannungen erfasst, also beispielswiese die Ausgangsspannung der ersten und der weiteren Einweggleichrichterschaltung sowie der Kaskadenschaltung. Die erfassten Werte, also Istwerte, werden mit jeweils zugeordneten Sollwerten verglichen, wobei jeder Einweggleichrichterschaltung und der Kaskadenschaltung ein Sollwert zugeordnet ist. Dazu wird zu jedem Sollwert die jeweils aktuelle Regelabweichung, also Differenz zwischen dem Istwert und dem zugehörigen Sollwert, bestimmt. Die größte relative Regelabweichung, also der Betrag des Quotienten aus jeweiliger Regelabweichung und jeweils zugeordnetem Sollwert, wird bestimmt. Von den so bestimmten Regelabweichungen wird also nur diejenige Regelabweichung einem Regler zugeführt, welche der größten relativen Regelabweichung zugeordnet ist. Der Regler ist beispielsweise ein linearer Regler, insbesondere ein P-Regler, ein PI-Regler oder ein PID Regler gegebenenfalls mit Vorsteuerpfad. Der Regler steuert die Schalter abhängig von der ihm zugeführten Regelabweichung an, insbesondere so dass diese Regelabweichung gegen Null geregelt wird. Hierzu wird der Betrag und/oder die Frequenz der der Primärwicklung zugeführten Spannung entsprechend gestellt.

Die der Primärwicklung oder den Primärwicklungsabschnitten zugeführte Spannung ist symmetrisch und weist auch symmetrische Spannungsbeträge auf, also gleiche Spannungsbeträge, insbesondere Spitzenspannungsbeträge, bei beiden Halbperioden. Außerdem ist der zeitliche Verlauf derart, dass die Spannungs-Zeit-Flächen symmetrisch verteilt sind, also die Spannungs-Zeit-Fläche im Bereich der positiven Spannungswerte während einer Periode der Wechselspannung der Spannungs-Zeit-Fläche im Bereich der negativen Spannungswerte während einer Periode der Wechselspannung.

### Bezugszeichenliste

1 Push-Pull-Schaltung
2 Halbbrückenschaltung
3 Vollbrückenschaltung
4 Einweggleichrichtung
5 Kaskadenschaltung
6 Einweggleichrichtung kombiniert mit Kaskadenschaltung
7 Einweggleichrichtung kombiniert mit Kaskadenschaltung und invertierter Einweggleichrichtung

## Patentansprüche

1. Übertrageranordnung mit einem Primärteil und einem Sekundärteil,
wobei das Primärteil eine Primärwicklung aufweist und das Sekundärteil eine an die Primärwicklung induktiv gekoppelte Sekundärwicklung aufweist,
wobei das Sekundärteil ausgelegt ist, mehrere Ausgangsspannungen bereitzustellen, insbesondere zur Versorgung eines Verbrauchers
wobei das Sekundärteil zumindest einen ersten Einweggleichrichter, einen weiteren Einweggleichrichter und eine Kaskadenschaltung aufweist,
wobei der erste Einweggleichrichter eine erste Diode und eine erste Kapazität umfasst, die derart angeordnet sind, dass der aus der Sekundärwicklung austretende Strom über die erste Diode der ersten Kapazität zugeführt wird,
wobei der weitere Einweggleichrichter eine zweite Diode und eine zweite Kapazität aufweist und der sich durch eine umgekehrt gepolte Diode unterscheidet vom ersten Einweggleichrichter, wobei die erste und die zweite Kapazität derart verbunden sind, dass sie einen gemeinsamen Knoten bilden, so dass die vom ersten Einweggleichrichter bereit stellbare Ausgangsspannung umgekehrtes Vorzeichen und dasselbe Referenzpotential aufweist im Vergleich zu der vom weiteren Einweggleichrichter bereit gestellten Ausgangsspannung,
wobei die Kaskadenschaltung eine dritte Diode, eine vierte Diode, eine dritte Kapazität und eine vierte Kapazität aufweist, wobei die Kaskadenschaltung aus der Sekundärwicklung versorgt ist und angeordnet ist, ausgangsseitig einen erhöhten Spannungsbetrag, im Vergleich zur Ausgangsspannung des Einweggleichrichters, bereitzustellen,
**dadurch gekennzeichnet, dass** in der Kaskadenschaltung der aus der Sekundärwicklung austretende Ausgangsstrom über die dritte Kapazität und die vierte Diode der vierten Kapazität zugeführt wird, an der die Ausgangsspannung der Kaskadenschaltung anliegt und/oder bereitgestellt wird, wobei die dritte Diode zwischen einerseits dem Verbindungspunkt zwischen der ersten Kapazität und der ersten Diode und andererseits zwischen dem Verbindungspunkt zwischen der Sekundärwicklung und der ersten Kapazität angeordnet ist,
wobei der Primärteil eine Vollbrücken-Schaltung aufweist, die ausgelegt ist, die Primärwicklung des Primärteils zu speisen,
wobei zwei Halbbrücken, insbesondere wobei jede Halbbrücke zwei in Reihe geschaltete Schalter aufweist, parallel geschaltet sind, wobei die so gebildete Parallelschaltung aus einer Gleichspannungsquelle versorgt ist, wobei die Primärwicklung aus der zwischen den Ausgängen der Halbbrücken anliegenden Spannung versorgt ist,
wobei die Übertragungsanordnung einen Regler aufweist, der ausgelegt ist, die Schalter der Halbbrücken anzusteuern,
wobei die Übertragungsanordnung ausgelegt ist, die am Sekundärteil ausgangsseitig bereit gestellten Spannungen zu erfassen und mit jeweiligen Sollwerten zu vergleichen, die größte relative Regelabweichung zu bestimmen und dem Regler zuzuführen, der ausgelegt ist die Schalter davon abhängig anzusteuern, so dass diese Regelabweichung gegen Null geregelt wird.

2. Übertrageranordnung nach mindestens einem der vorangegangenen Ansprüche,
**dadurch gekennzeichnet, dass**
die Schalter als steuerbare Halbleiterschalter, insbesondere wie IGBT oder MOSFET, ausgeführt sind.

3. Übertrageranordnung nach mindestens einem der vorangegangenen Ansprüche,
**dadurch gekennzeichnet, dass** der Regler ausgelegt ist, die Schalter derart anzusteuern, dass die Spannungs-Zeit-Fläche des zeitlichen Verlaufs der an der Primärwicklung oder an einem Primärwicklungsabschnitt anliegenden Spannung symmetrisch ist, insbesondere also mittelwertfrei.

4. Übertrageranordnung nach mindestens einem der vorangegangenen Ansprüche
**dadurch gekennzeichnet, dass** der Regler ausgelegt ist, die Schalter derart anzusteuern, dass der zeitliche Verlauf der an der Primärwicklung oder an einem Primärwicklungsabschnitt anliegenden Spannung symmetrisch ist, insbesondere also der Betrag der Spannung.

## Claims

1. Transformer arrangement comprising a primary part and a secondary part,
the primary part having a primary winding and the secondary part having a secondary winding inductively coupled to the primary winding,
the secondary part being configured to provide a plurality of output voltages, in particular for powering a load,
the secondary part having at least a first half-wave rectifier, a further half-wave rectifier and a cascade connection,
the first half-wave rectifier comprising a first diode and a first capacitor, which are arranged such that the current exiting the secondary winding is fed to the first capacitor via the first diode,
the further half-wave rectifier having a second diode and a second capacitor and differing from the first half-wave rectifier by way of a diode of reverse polarity, the first and the second capacitors being connected such that they form a common node, in such a way that the output voltage able to be provided by the first half-wave rectifier has the opposite sign and the same reference potential compared with the output voltage provided by the further half-wave rectifier,
the cascade connection having a third diode, a fourth diode, a third capacitor and a fourth capacitor, the cascade connection being powered from the secondary winding and being arranged so as to provide a higher voltage magnitude at the output compared with the output voltage of the half-wave rectifier,
**characterised in that**
in the cascade connection, the output current exiting the secondary winding is fed via the third capacitor and the fourth diode to the fourth capacitor, at which the output voltage of the cascade connection is applied and/or provided, the third diode being arranged between the connection point between the first capacitor and the first diode on the one hand, and between the connection point between the secondary winding and the first capacitor on the other hand,
the primary part having a full-bridge connection configured to feed the primary winding of the primary part,
two half-bridges being connected in parallel, each half-bridge in particular having two switches connected in series, the parallel connection thus formed being powered from a DC voltage source, the primary winding being powered from the voltage applied between the outputs of the half-bridges,
the transformer arrangement having a controller configured to actuate the switches of the half-bridges,
the transformer arrangement being configured to record the voltages provided at the output of the secondary part and to compare them with respective setpoints, to determine the highest relative deviation and to feed it to the controller, which is configured to actuate the switches on that basis such that said deviation is controlled towards zero.

2. Transformer arrangement according to at least one of the preceding claims,
**characterised in that**
the switches are configured as controllable semiconductor switches, in particular such as IGBTs or MOSFETs.

3. Transformer arrangement according to at least one of the preceding claims,
**characterised in that**
the controller is configured to actuate the switches such that the voltage-time area of the curve over time of the voltage applied at the primary winding or at a primary winding portion is symmetrical, in particular therefore has no mean value.

4. Transformer arrangement according to at least one of the preceding claims,
**characterised in that**
the controller is configured to actuate the switches such that the curve over time of the voltage applied at the primary winding or at a primary winding portion is symmetrical, in particular therefore the magnitude of the voltage.

## Revendications

1. Ensemble de transmission pourvu d'une partie primaire et d'une partie secondaire,
la partie primaire présentant un enroulement primaire et la partie secondaire présentant un enroulement secondaire couplé de manière inductive à l'enroulement primaire,
la partie secondaire étant conçue pour fournir plusieurs tensions de sortie, en particulier pour alimenter un consommateur,
la partie secondaire présentant au moins un premier redresseur demi-onde, un redresseur demi-onde supplémentaire et un circuit en cascade,
le premier redresseur demi-onde comprenant une première diode et une première capacité qui sont disposées de telle sorte que le courant sortant de l'enroulement secondaire est amené à la première capacité en passant par la première diode,
dans lequel le redresseur demi-onde supplémentaire présente une deuxième diode et une deuxième capacité et se distingue du premier redresseur demi-onde par une diode à polarisation inverse, la première et la deuxième capacité étant reliées ensemble de façon à former un nœud commun, de sorte que la tension de sortie pouvant être fournie par le premier redresseur demi-onde présente un signe inversé et le même potentiel de référence en comparaison avec la tension de sortie fournie par le redresseur demi-onde supplémentaire,
le circuit en cascade présentant une troisième diode, une quatrième diode, une troisième capacité et une quatrième capacité, le circuit en cascade étant alimenté par l'enroulement secondaire et disposé pour fournir en sortie une grandeur de tension accrue en comparaison avec la tension de sortie du redresseur demi-onde,
**caractérisé en ce que** dans le circuit en cascade, le courant de sortie sortant de l'enroulement secondaire est amené, en passant par la troisième capacité et la quatrième diode, à la quatrième capacité où la tension de sortie du circuit en cascade est appliquée et/ou fournie, la troisième diode étant disposée d'une part entre le point de connexion entre la première capacité et la première diode et d'autre part entre le point de connexion entre l'enroulement secondaire et la première capacité,
la partie primaire présentant un circuit en pont intégral qui est conçu pour alimenter l'enroulement primaire de la partie primaire,
dans lequel deux demi-ponts, en particulier chaque demi-pont présentant deux commutateurs connectés en série, sont connectés en parallèle, la connexion parallèle ainsi formée étant alimentée par une source de tension continue, l'enroulement primaire étant alimenté par la tension appliquée entre les sorties des demi-ponts,
l'ensemble de transmission présentant un régulateur qui est conçu pour piloter les commutateurs des demi-ponts,
l'ensemble de transmission étant conçu pour détecter les tensions fournies côté sortie au niveau de la partie secondaire, et pour les comparer à des valeurs de consigne respectives, pour déterminer le plus grand écart de réglage relatif et pour l'amener au régulateur qui est conçu pour piloter les commutateurs indépendamment de celui-ci de sorte que cet écart de réglage est réglé sur zéro.

2. Ensemble de transmission selon au moins l'une des revendications précédentes, **caractérisé en ce que** les commutateurs sont réalisés sous forme de commutateurs à semi-conducteurs pouvant être commandés, en particulier sous forme d'IGBT ou de MOSFET.

3. Ensemble de transmission selon au moins l'une des revendications précédentes, **caractérisé en ce que** le régulateur est conçu pour piloter les commutateurs de telle sorte que la surface tension-temps de la courbe de temps de la tension appliquée à l'enroulement primaire ou à une partie d'enroulement primaire est symétrique, donc en particulier à valeur moyenne nulle.

4. Ensemble de transmission selon au moins l'une des revendications précédentes, **caractérisé en ce que** le régulateur est conçu pour piloter les commutateurs de telle sorte que la courbe de temps de la tension appliquée à l'enroulement primaire ou à une partie d'enroulement primaire est symétrique, en particulier donc égale à la grandeur de la tension.
